# EUROPEAN PATENT APPLICATION

(11) **EP 2 106 145 A2**
(43) Date of publication of application: **30.09.2009**
(21) Application number: 09156746.1
(22) Date of filing: 30.03.2009
(51) Int. Cl.: H04N 7/26, H04N 7/50

(54) **Method and apparatus for intra-prediction video coding/decoding**

(30) Priority: 28.03.2008 KR 20080029293; 14.10.2008 KR 20080100752
(71) Applicant: Samsung Electronics Co., Ltd., Suwon-si, Gyeonggi-do (KR); Sungkyunkwan University Foundation for Corporate Collaboration, Jangan-gu, Suwon-si Gyeonggi-do 440-746 (KR)
(72) Inventor: Choi, Kwang-Pyo, Gyeonggi-do (KR); Oh, Yun-Je, Gyeonggi-do (KR); Joo, Young-Hun, Gyeonggi-do (KR); Jeon, Byeung-Woo, Gyeonggi-do (KR); Jung, Bong-Soo, Gyeonggi-do (KR); Lee, Ho-Young, Gyeonggi-do (KR)
(74) Representative: Harrison Goddard Foote

(57) **Abstract**

An intra-prediction coding and decoding method is provided, in which a picture to be encoded is received in coding units, each of the coding units is divided into a plurality of sub-units, an IPM is determined for each coding unit, residual data is acquired for each sub-unit of each coding unit according to the determined IPM, and information about the IPM of each coding unit and the residual data of each sub-unit of each coding unit are encoded.

## Description

### BACKGROUND OF THE INVENTION

### 1. Field of the Invention

The present invention generally relates to a video coding method. More particularly, the present invention relates to an intra-prediction coding method.

### 2. Description of the Related Art

Many digital video compression techniques have been proposed to achieve low data rates or reduce storage needs with high video quality during transmission or storage of a video signal. These digital video compression techniques are realized by international standards such as H.261, H.263, H.264, Moving Picture Experts Group-2 (MPEG-2), and MPEG-4. The compression techniques achieve relatively high compression rates by Discrete Cosine Transform (DCT), Motion Compensation (MC), or the like. The video compression techniques find their applications in efficient transmission of video data streams over various digital networks including a portable phone network, a computer network, a cable network, and a satellite network, for example. They are also employed for efficiently storing video data streams in memory media such as a hard disk, an optical disk, and a Digital Video Disk (DVD).

For high video quality, a large amount of data is required to encode a video signal. However, a communication network that delivers video data can limit data rates for encoding. For instance, a data channel in a satellite broadcasting system or a digital cable TV network carries data usually at a Constant Bit Rate (CBR) and the capacity of a storage medium like a disk is limited.

Therefore, a video coding process carries out an appropriate trade-off between video quality and the number of bits required for image compression. Because video coding is a relatively complex process, for example, when video coding is implemented in software, the video coding process needs a relatively large number of Central Processing Unit (CPU) cycles. What is worse, if video coding is performed in real time, temporal restrictions limit coding accuracy, resulting in a limited video quality.

Video coding is critical in a real environment. In this context, video coding methods have been proposed with the aim to reduce process complexity and data rates as much as possible and achieve high image quality.

In H.264/AVC, intra-prediction coding is performed spatially using neighboring pixel values. Decision as to what neighboring pixels to use is important to improve coding efficiency. To do so, an optimal intra-prediction direction is determined and the values of pixels to be encoded are predicted using neighboring pixel values along the intra-prediction direction. An encoder notifies a decoder of the intra-prediction direction so that the decoder can calculate the predictive values of the pixels for decoding using the neighboring pixels in the same direction.

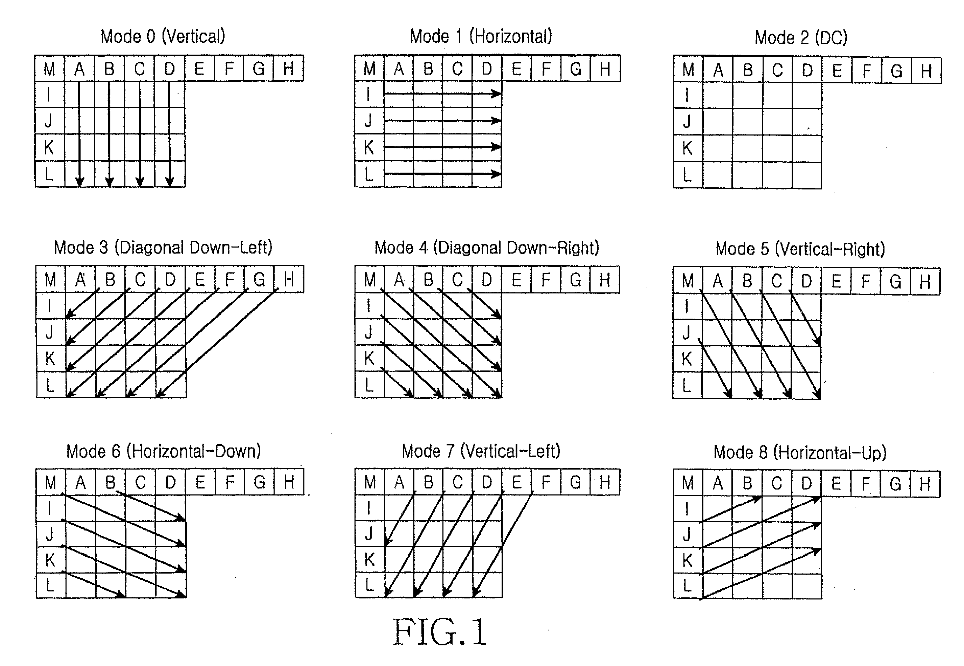

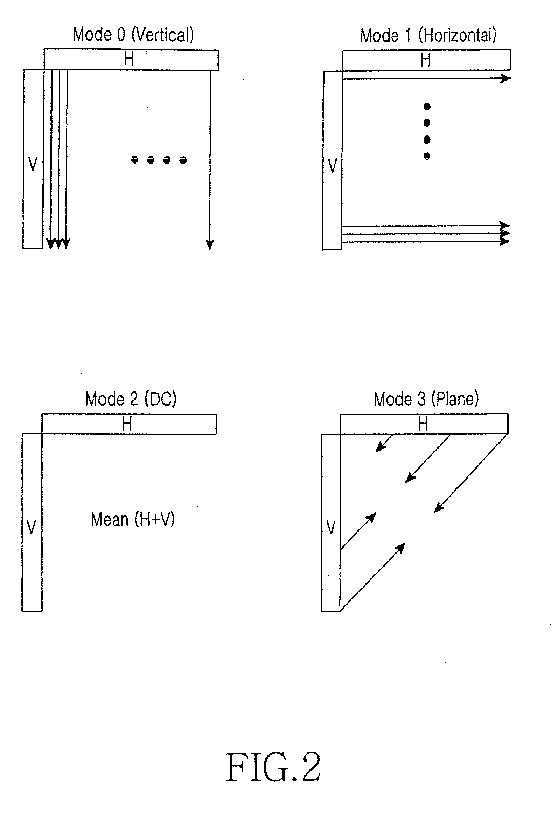

FIG. 1 illustrates H.264 Intra-Prediction Modes (IPMs) for a block of 4x4 pixels and FIG. 2 illustrates H.264 IPMs for a block of 16x16 pixels.

Referring to FIG. 1, H.264 offers nine 4x4 IPMs, Mode 0 (Vertical), Mode 1 (Horizontal), Mode 2 (DC), Mode 3 (Diagonal Down-Left), Mode 4 (Diagonal Down-Right), Mode 5 (Vertical-Right), Mode 6 (Horizontal-Down), Mode 7 (Vertical-Left), and Mode 8 (Horizontal-Up).

Referring to FIG. 2, there are four 16x16 IPMs in H.264, Mode 0 (Vertical), Mode 1 (Horizontal), Mode 2 (DC), and Mode 3 (Plane).

For intra-prediction coding, a current macroblock is encoded in a total of 13 modes, the nine 4x4 and four 16x16 IPMs, and one with a minimum cost is chosen. The current macroblock is encoded in the chosen IPM. To be more specific, the four 16x16 IPMs are performed for the current block and one 16x16 IPM with a minimum cost is chosen. Then intra-prediction is carried out sequentially in the nine 4x4 IPMs for 16 4x4 sub-blocks and one mode with a minimum cost is chosen for each sub-block. The selected 16x16 IPM is compared with the 16 4x4 IPMs in terms of cost and an IPM/IPMs with a minimum cost is/are finally chosen.

In the case of a 4x4 intra-prediction, while intra-prediction coding for every 4x4 sub-block creates a relatively small amount of residual data, information about 16 IPMs for every coding unit, for example, every macroblock should be encoded, thus requiring a large number of bits and decreasing compression efficiency. In the case of an intra-prediction coding for every coding unit, for example, 16x16 intra-prediction coding as illustrated in FIG. 2, a small number of bits can be allocated for encoding IPM information, but intra-prediction of a wide area decreases the correlation between predicted pixels and original pixels, creating much residual data to be encoded. As a consequence, coding efficiency is decreased.

### SUMMARY OF THE INVENTION

An aspect of an embodiment of the present invention is to address at least the problems and/or disadvantages described above and to provide at least the advantages described below. Accordingly, an aspect of an embodiment of the present invention is to provide an encoding/decoding method and apparatus for effectively reducing the amount of data required for intra-prediction of a coding unit.

In accordance with an aspect of an embodiment of the present invention, there is provided an intra-prediction coding method, in which a picture to be encoded is received in coding units, each of the coding units is divided into a plurality of sub-units, an IPM is determined for the each coding unit, residual data is acquired for each sub-unit of the each coding unit according to the determined IPM, and information about the IPM of the each coding unit and the residual data of each sub-unit of each coding unit are encoded.

It is preferred that for the IPM determination, information indicating an IPM is received from a user and the received IPM is determined as the IPM for the each coding unit, and for the residual data acquisition, intra-prediction is performed by applying the determined IPM to the each sub-unit and residual data between a predicted sub-unit and an original sub-unit are acquired.

It is preferred that for the IPM determination, intra-prediction is performed on a sub-unit basis in each of a plurality of IPMs, residual data between predicted sub-units and original sub-units are determined, recovered sub-units are generated by combining the residual data with the predicted sub-units, and an IPM is selected from the plurality of IPMs as the IPM of the each coding unit, and for the residual data acquisition, the residual data generated during generating the recovered sub-units are read.

For the IPM selection, a cost of the coding unit is acquired for each of the plurality of IPMs by combining the recovered sub-units, and an IPM with a minimum cost is selected as the IPM of the each coding unit.

For the intra-prediction on a sub-unit basis, intra-prediction is performed on a sub-unit basis using pixels of a recovered sub-unit neighboring to the each sub-unit.

In accordance with another aspect of an embodiment of the present invention, there is provided a method for recovering a video signal in coding units from coded compressed data, in which an IPM for a coding unit is determined from the compressed data, sub-units of the coding unit are recovered according to the determined IPM, and video information of the coding unit is recovered by combining the recovered sub-units.For the sub-unit recovery, residual data of the sub-units are acquired from the compressed data, intra-prediction is performed for the sub-units by applying the same IPM to the sub-units, and the sub-units are recovered by combining the predicted sub-units with the residual data of the sub-units.For the sub-unit intra-prediction, intra-prediction can be performed for each sub-unit using recovered pixel values neighboring to the each sub-unit.

For the sub-unit recovery, residual data of the sub-units are acquired from the compressed data, intra-prediction is performed for the sub-units by applying the same IPM to the sub-units, and the sub-units are recovered by combining the predicted sub-units with the residual data of the sub-units.

For the sub-unit intra-prediction, intra-prediction can be performed for each sub-unit using recovered pixel values neighboring to the each sub-unit.

It is preferred that intra-prediction is performed or the sub-units in a predetermined order.

In accordance with a further aspect of exemplary embodiments of the present invention, there is provided an intra-prediction coding apparatus, in which an intra predictor applies a same IPM to a plurality of sub-units divided from a coding unit, generates residual data for the sub-units of the coding unit, and encodes information about the IPM of the coding unit and the residual data of the sub-units.

The intra predictor can determine the IPM for the coding unit, taking into account predicted results of the sub-units.

The intra predictor can receive information indicating an IPM from a user and determine the IPM as the IPM of the coding unit.

The intra-prediction coding apparatus may further include a subtractor for acquiring a difference between a predicted sub-unit generated by applying the IPM to a sub-unit and a sub-unit of an externally received original picture, a residual data encoder for encoding residual data including the difference, a residual data decoder for decoding the encoded residual data in accordance with an encoding method of the residual data encoder, and an adder for generating a recovered sub-unit by combining the predicted sub-unit with the decoded residual data.

It is preferred that the intra predictor performs intra-prediction for each sub-unit on a sub-unit basis using pixels of a recovered sub-unit neighboring to the each sub-unit.

In accordance with still another aspect of an embodiment of the present invention, there is provided an apparatus for recovering a video signal in coding units from coded compressed data, in which a demultiplexer demultiplexes the compressed data into information about an IPM for a coding unit and residual data of sub-units of the coding unit, and an intra decoder performs intra-prediction for the sub-units by applying the IPM to the sub-units.The apparatus may further include a residual data decoder for decoding the residual data in accordance with a coding method of the residual data, and an adder for generating recovered sub-units by combining predicted sub-units with the decoded residual data.

The apparatus may further include a residual data decoder for decoding the residual data in accordance with a coding method of the residual data, and an adder for generating recovered sub-units by combining predicted sub-units with the decoded residual data.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 illustrates 4x4 IPMs in H.264;
FIG. 2 illustrates 16x16 IPMs in H.264;
FIG. 3 is a block diagram of an intra-prediction video coding apparatus according to an embodiment of the present invention;
FIG. 4 illustrates an intra-prediction order for a coding unit divided into a plurality of sub-units according to an embodiment of the present invention;
FIG. 5 illustrates a vertical mode for a coding unit according to an embodiment of the present invention;
FIG. 6 illustrates a horizontal mode for a coding unit according to an embodiment of the present invention;
FIG. 7 illustrates a DC mode for a coding unit according to an embodiment of the present invention;
FIG. 8 is a flowchart illustrating an intra-prediction coding method according to an embodiment of the present invention;
FIG. 9 is a flowchart illustrating an intra-prediction coding method according to another embodiment of the present invention;
FIG. 10 is a block diagram of an intra-prediction video decoding apparatus according to an embodiment of the present invention; and
FIG. 11 is a flowchart illustrating an intra-prediction decoding method according to an embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The following description is made under the assumption that an intra-prediction coding method and apparatus according to embodiments of the present invention comply with H.264/AVC, by way of example. Therefore, a coding unit according to the embodiments of the present invention is a macroblock being an H.264/AVC coding unit for encoding the pixels of a picture.

In accordance with the embodiments of the present invention, a coding unit (e.g. macroblock) is divided into a plurality of sub-units and each sub-unit is an intra-prediction unit. Further, the sub-unit can be a block of 8x8, 4x4, or 2x2 pixels according to the H.264/AVC standard.

While the intra-prediction coding and decoding method of the present invention is based on H.264/AVC, uses a macroblock as a coding unit, and forms a sub-unit with 8x8, 4x or 2x2 pixels, to which the present invention is not limited, it is to be clearly understood that the present invention is applicable for any other video coding and decoding.

A picture for which encoding is in progress is referred to as a Current Picture (CP) and a macroblock for which encoding is in progress is referred to as a Current MacroBlock (CMB). A sub-unit for which intra-prediction coding is in progress is referred to as a Current Sub-block (CS).

A substantial correlation may exist between IPMs of the sub-units of a coding unit. Based on the correlation, the intra-prediction coding method encodes information about one IPM for each coding unit and performs intra-prediction on a sub-unit basis.

The intra-prediction decoding method is **characterized in that** information about an IPM received on a coding unit basis is checked, the IPM is applied to all sub-units of a coding unit, and intra-prediction decoding is performed on a sub-unit by sub-unit basis.

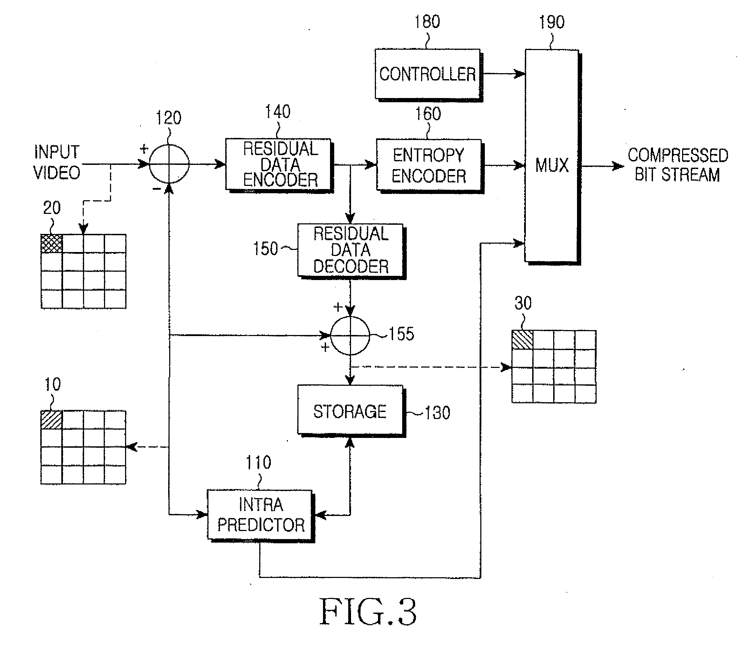

FIG. 3 is a block diagram of an intra-prediction video coding apparatus according to an embodiment of the present invention. Referring to FIG. 3, the intra-prediction video coding apparatus includes an intra predictor 110, a subtractor 120, a storage 130, a residual data encoder 140, a residual data decoder 150, an adder 155, an entropy encoder 160, a controller 180, and a Multiplexer (MUX) 190.

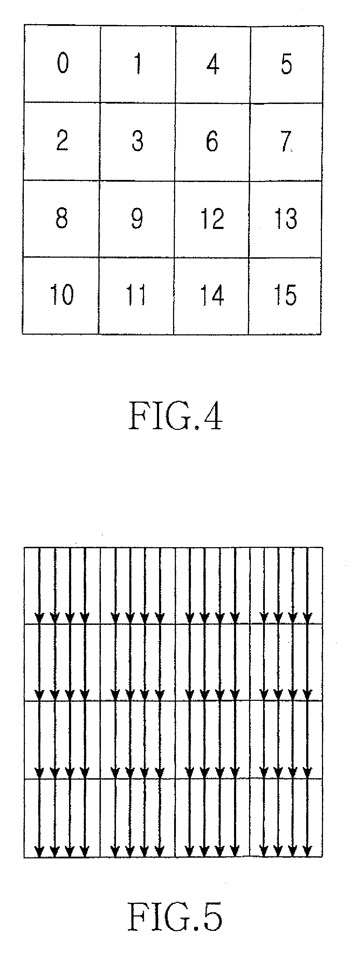

The controller 180 indicates an IPM for a coding unit to the intra predictor 110. The IPM can be one of the IPMs illustrated in FIGs. 5, 6 and 7. The intra predictor 110 individually predicts a plurality of sub-units included in the coding unit in the IPM. Specifically, the intra predictor 110 sequentially predicts the sub-units (e.g. 16 4x4 pixel units) of a coding unit (e.g. a 16x16 pixel unit), referring to stored intra-prediction coded pixels (e.g. the pixels above or to the left of the CS) in the intra-prediction order illustrated in FIG. 4. The intra predictor 110 also generates a predicted sub-unit 10 by applying the IPM to each sub-unit. In the process of intra-prediction, a recovered sub-unit 30 is created from residual data between the predicted sub-unit 10 and an original sub-unit 20 at the same position as the predicted sub-unit 10 and the intra predictor 110 uses the pixels of the recovered sub-unit 30 as a reference for intra-prediction of a next sub-unit. Upon completion of intra-prediction for every sub-unit of the coding unit, the intra predictor 110 calculates the cost of the IPM for the coding unit.

For instance, the cost of the coding unit can be calculated by summing the costs of the sub-units. While the cost of a coding unit is calculated by summing the costs of the sub-units of the coding unit in the an embodiment of the present invention, to which the present invention is not limited, it can be further contemplated that after all sub-units of a coding unit are recovered, the cost of the coding unit is then calculated.

The intra predictor 110 performs intra-prediction for a plurality of IPMs by repeating the above operation and calculates the costs of the IPMs. Then the intra predictor 110 selects an IPM with a minimum cost for the current CS.

The intra predictor 110 is notified of an IPM by the controller 180 is an embodiment of the present invention, to which the present invention is not limited. For example, the controller 180 commands intra-prediction of sub-units to the intra predictor 110 and the intra predictor 110 predicts the sub-units sequentially in the IPMs.

During intra-prediction coding, the subtractor 120 calculates the difference between the original sub-unit 20 and the predicted sub-unit 10 received from the intra predictor 110 and thus outputs residual data.

The residual data encoder 140 transforms the residual data received from the subtractor 120, for example using DCT, quantizes the transformed residual data, and encodes the quantized residual data. The residual data decoder 150 decodes the encoded residual data.

The adder 155 generates the recovered unit 30 by combining the predicted unit 10 with the decoded residual data received from the residual data decoder 150.

The entropy encoder 160 entropy-encodes the residual data. The MUX 190 multiplexes information indicating the IPM, the entropy-coded residual data, and information about the residual data and outputs the resulting compressed data.

The controller 180 provides overall control to each function block. Especially to select an IPM for a current coding unit, i.e. a CMB, the controller 180 controls the operations of the intra predictor 110, the subtractor 120, the storage 130, the residual data encoder 140, the residual data decoder 150, and the adder 155.

Specifically, the controller 180 controls the intra predictor 110 to generate a plurality of predicted sub-units 10 by predicting sub-units in a plurality of IPMs and controls the subtractor 120, controls the residual data encoder 140, and the residual data decoder 150 to encode and decode residual data between predicted sub-units 10 and original sub-units in each IPM, and controls the adder 155 and the storage 130 to generate and store recovered sub-units 30 by combining the predicted sub-units 10 with the recovered residual data.

The above-described intra-prediction video coding apparatus may further include a motion estimator, a motion compensator, and a deblocking filter based on H.264/AVC. The residual data encoder 140 and the residual data decoder 150 may further perform transformation using DCT and quantization (inverse transformation using inverse DCT and dequantization) for particular pictures (e.g. Predicted Pictures(P pictures) or Bi-directionally predicted pictures(B pictures) based on MPEG-2 or H.264 standard. Specifically, Predicted Pictures(P pictures) include macroblocks that may be coded with forward prediction from references made from previous I and P pictures or may be intra coded. Bi-directionally predicted pictures(B Pictures) include macroblocks that may be coded with interpolated prediction from past and/or future I or P references) as well as for residual data according to H.264/AVC. The intra-prediction video coding apparatus may further perform H.264/AVC-based video coding as well as the intra-prediction coding described herein.

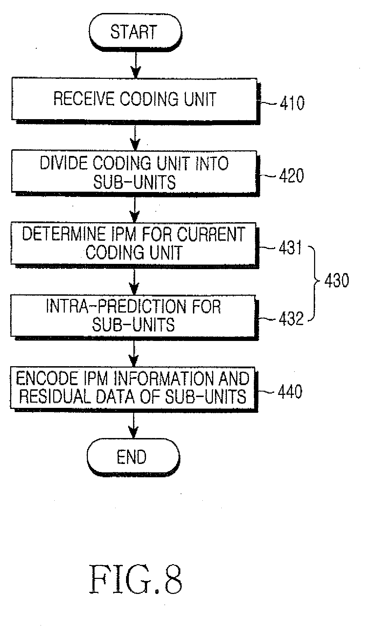

A description will now be made of an intra-prediction coding method for the intra-prediction video coding apparatus with reference to FIG. 8.

FIG. 8 is a flowchart illustrating an intra-prediction coding method according to an embodiment of the present invention.

Referring to FIG. 8, upon input of a coding unit (e.g. a macroblock), the controller 180 commands the intra predictor 110 to operate in step 410.

The intra predictor 110 divides the coding unit into a plurality of sub-units (e.g. 16 4x4 pixel units) in step 420. For example, the macroblock is divided into 16 sub-units as illustrated in FIG. 4.

The controller 180 controls operations of the intra predictor 110, the subtractor 120, the residual data encoder 140, the residual data decoder 150, and the adder 155 in order to determine an IPM for the current coding unit and predict the current coding unit in the IPM in step 430.

Specifically, step 430 may include sub-steps 431 and 432. The controller 180 determines an IPM for the current coding unit from among a plurality of IPMs and notifies the intra predictor 110 of the selected IPM in step 431. For example, the controller-determined IPM can be an IPM determined by a user in step 431. In step 432, the intra predictor 110 starts intra-prediction with sub-unit 0 illustrated in FIG. 4 according to the notified IPM, thus creating a predicted sub-unit 10. Then, the subtractor 120 receives the predicted sub-unit 10 and an original sub-unit 20 at the same position as the predicted sub-unit 10 and outputs residual data between the predicted sub-unit 10 and the original sub-unit 20. The residual data encoder 140 encodes the residual data and outputs the encoded residual data to the entropy encoder 160 and the residual data decoder 150. The residual data decoder 150 decodes the encoded residual data and the adder 155 generates a recovered sub-unit 30 by combining the predicted sub-unit 10 with the residual data. The recovered sub-unit 30 is stored in the storage 130. Then the intra predictor 110 predicts sub-unit 1 illustrated in FIG. 4. If the intra-prediction of sub-unit 1 in the IPM requires the pixels of sub-unit 0, the intra predictor 110 performs the intra-prediction for sub-unit 1 using the predicted pixels, that is, the pixels of the recovered unit 30 of sub-unit 0. In this manner, the intra predictor 110 completes intra-prediction for the coding unit.

In step 440, the MUX 190 encodes information about the determined IPM and the residual data of the sub-units generated by intra-prediction.

While the IPM determined by the controller 180 is user-selected in step 431, to which the present invention is not limited, IPM determination can be done in various manners. It is further contemplated that the intra-prediction video coding apparatus performs intra-prediction for a coding unit in a plurality of IPMs, calculates the costs of the coding unit for the IPMs, and selects an IPM with a minimum cost.

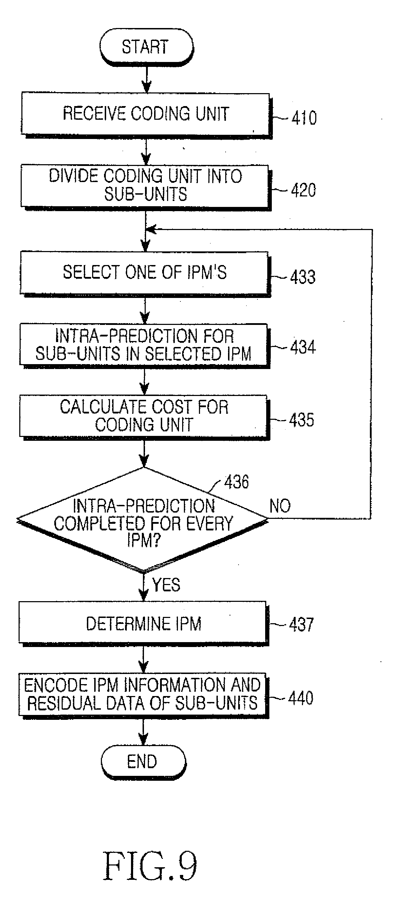

FIG. 9 is a flowchart illustrating an intra-prediction coding method according to another embodiment of the present invention.

Referring to FIG. 9, steps 410, 420 and 440 are performed in the same manner as in the intra-prediction coding method of the afore-described embodiment of the present invention. Herein, only steps 433 to 437 will be described.

In accordance with the intra-prediction coding method of this embodiment of the present invention, intra-prediction is carried out in a plurality of individual IPMs. Therefore, one of the IPMs is selected in step 433. For instance, the controller 180 can select an IPM from among the plurality of IPMs and indicate the selected IPM to the intra predictor 110. Or the controller 180 can provide a command indicating IPM selection to the intra predictor 110 and the intra predictor 110 can select one of the IPMs accordingly.

While the controller 180 or the intra predictor 110 selects one of the IPMs in step 433, to which the present invention is not limited, it is clear to those skilled in the art that IPM determination can be done in other manners.

In step 434, the intra predictor 110 starts intra-prediction with sub-unit 0 illustrated in FIG. 4 according to the selected IPM, thus creating a predicted sub-unit 10. Then, the subtractor 120 receives the predicted sub-unit 10 and an original sub-unit 20 at the same position as the predicted sub-unit 10 and outputs residual data between the predicted sub-unit 10 and the original sub-unit 20. The residual data encoder 140 encodes the residual data and outputs the encoded residual data to the entropy encoder 160 and the residual data decoder 150. The residual data decoder 150 decodes the encoded residual data and the adder 155 generates a recovered sub-unit 30 by combining the predicted sub-unit 10 with the decoded residual data. The recovered sub-unit 30 is stored in the storage 130. Then the intra predictor 110 predicts sub-unit 1 illustrated in FIG. 4. If the intra-prediction of sub-unit 1 in the IPM requires the pixels of sub-unit 0, the intra predictor 110 performs the intra-prediction for sub-unit 1 using the predicted pixels, that is, the pixels of the recovered unit 30 of sub-unit 0. In this manner, the intra predictor 110 completes intra-prediction for the coding unit.

In step 435, the intra predictor 110 calculates the cost of the selected IPM.

For calculation of the cost of the plurality of IPMs, it is determined whether intra-prediction has been completed for every IPM in step 436. Upon completion of intra-prediction for every IPM, step 437 is performed. If there remains any IPM for intra-prediction, steps 433, 434 and 435 are repeated.

For example, the intra predictor 110 receives information indicating a vertical IPM illustrated in FIG. 5 from the controller 180 in step 433 and predicts all sub-units of a coding unit sequentially in the coding order illustrated in FIG. 4 and recovers the sub-units in step 434. Take sub-unit 3 for example. Sub-units 0, 1 and 2 have been already predicted in a vertical direction and recovered before vertical intra-prediction of sub-unit 3. Hence, the intra predictor 110 uses the recovered pixels for vertical intra-prediction of sub-unit 3. That is, all or part of the pixels of sub-units predicted and recovered earlier than a current sub-unit, such as the four lowest pixels of sub-unit 1, are used as a reference for intra-prediction of sub-unit 3. The intra predictor 110 completes intra-prediction and recovery of the coding unit in the IPM notified by the controller 180. In step 435, the intra predictor 110 calculates the costs between recovered sub-units 30 and original sub-units 20 and sums these costs the cost of the coding unit.

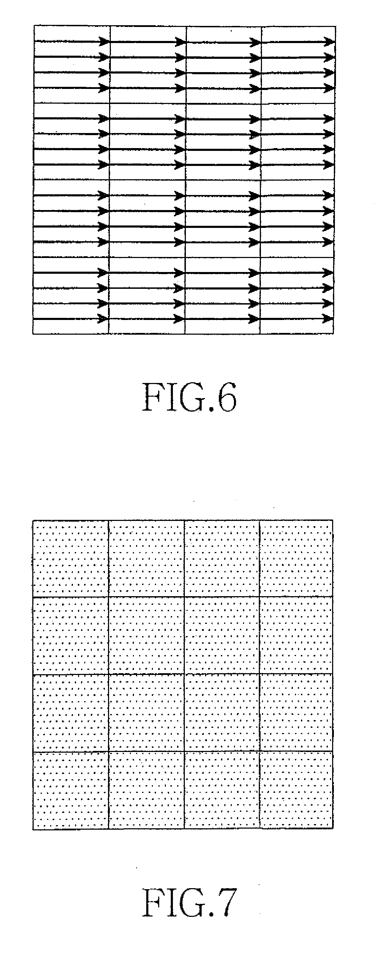

When the controller 180 determines whether intra-prediction has not been completed for every IPM in step 436, step 433 is repeated. That is, the controller 180 indicates a horizontal IPM illustrated in FIG. 6 to the intra predictor 110. Thus the intra predictor 110 predicts all sub-units of the coding unit sequentially in the coding order illustrated in FIG. 4 in a horizontal direction in step 434. Take sub-unit 3 for example. Sub-units 0, 1 and 2 have been already predicted in a vertical direction and recovered before horizontal intra-prediction of sub-unit 3. Hence, the intra predictor 110 uses the recovered pixels for horizontal intra-prediction of sub-unit 3. That is, all or part of the pixels of sub-units predicted and recovered earlier than a current sub-unit, such as the four utmost right pixels of sub-unit 1, are used as a reference for intra-prediction of sub-unit 3. The intra predictor 110 completes intra-prediction and recovery of the coding unit in the IPM notified by the controller 180. In step 435, the intra predictor 110 calculates the costs between recovered sub-units 30 and original sub-units 20 and sums these costs as the cost of the coding unit.

The controller 180 determines whether intra-prediction has been completed for every IPM in step 436 and thus repeats step 433. That is, the controller 180 indicates a DC IPM illustrated in FIG. 7 to the intra predictor 110. The intra predictor 110 predicts all sub-units of the coding unit sequentially in the coding order illustrated in FIG. 4 in the DC mode in step 434. Take sub-unit 3 for example. Sub-units 0, 1 and 2 have been already predicted in the DC mode and recovered before horizontal intra-prediction of sub-unit 3. Hence, the intra predictor 110 uses the recovered pixels for horizontal intra-prediction of sub-unit 3. That is, all or part of the pixels of sub-units predicted and recovered earlier than a current sub-unit, such as the four utmost right pixels of sub-unit 2 and the four lowest pixels of sub-unit 1, are used as a reference for intra-prediction of sub-unit 3. The intra predictor 110 completes intra-prediction and recovery of the coding unit in the IPM notified by the controller 180. In step 435, the intra predictor 110 calculates the costs between recovered sub-units 30 and original sub-units 20 and sums these costs as the cost of the coding unit.

The controller 180 determines whether intra-prediction has been completed for every IPM in step 436.

The intra predictor 110 selects an IPM with a minimum cost based on the costs calculated for the IPMs in step 437.

While the intra predictor 110 selects an IPM with a minimum cost using costs calculated for the IPMs in an embodiment of the present invention, to which the present invention is not limited, step 437 suffices as far as an IPM with a minimum cost is selected based on the costs calculated for the IPMS and what entity is responsible for selecting the IPM can be changed in various manners. For example, the intra predictor 110 can provide the costs of the IPMs to the controller 180 and the controller 180 can select the minimum-cost IPM.

Also, intra-prediction is performed in three IPMs in an embodiment of the present invention, to which the present invention is not limited. For instance, the nine intra-prediction modes illustrated in FIG. 1 can be applied to a coding unit.

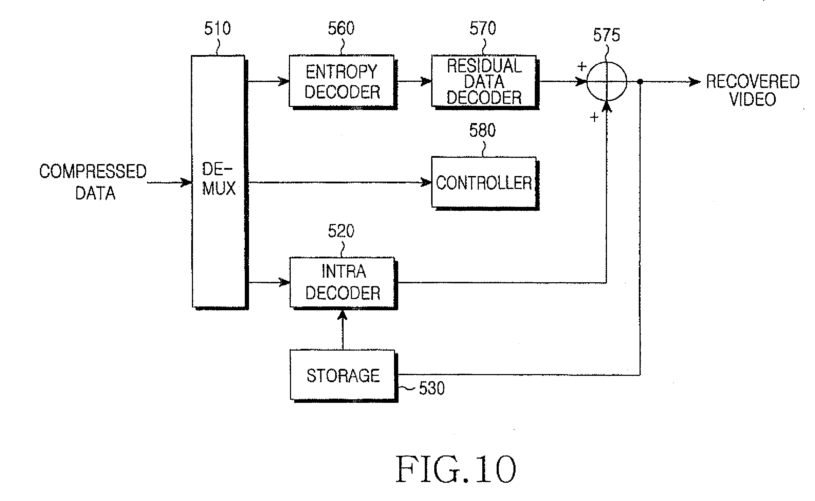

FIG. 10 is a block diagram of an intra-prediction video decoding apparatus according to an embodiment of the present invention. Referring to FIG. 10, the intra-prediction video decoding apparatus includes a Demultiplexer (DEMUX) 510, an intra decoder 520, a storage 530, an entropy decoder 560, a residual data decoder 570, an adder 575, and a controller 580.

The DEMUX 510 acquires information about an IPM for a coding unit by parsing coded compressed data.

The intra decoder 520 decodes the coded IPM information and recovers the coding unit on a sub-unit basis. That is, the intra decoder 520 performs intra-prediction using neighboring pixel values stored in the storage 530, thus creating predicted sub-units in the order illustrated in FIG. 4. The predicted unit generation is done in the same manner as in the intra-prediction video coding apparatus.

The adder 575 generates recovered sub-units by combining the predicted units with residual data and stores them in the storage 530.

In generating the predicted sub-units in the order illustrated in FIG. 4, the intra decoder 520 performs intra-prediction based on the pixel values of the recovered sub-units. For instance, if the IPM information indicates the horizontal IPM illustrated in FIG. 6 and intra-prediction has been completed for sub-units 0, 1 and 2 in FIG. 4, the intra decoder 520 performs horizontal intra-prediction based on recovered pixels stored in the storage 530 (e.g. the four utmost right pixel values of sub-unit 2).

The entropy decoder 560 generates quantized coefficients by entropy-decoding received compressed data. The residual data decoder 570 recovers residual data by de-quantization and inverse transformation of the quantized coefficients.

The adder 575 recovers final video information by reflecting the recovered residual data to video information recovered by intra-prediction.

The controller 580 provides overall control to the intra-prediction video decoding apparatus by controlling each function block.

The above-described intra-prediction video decoding apparatus may further include a motion estimator, a motion compensator, and a deblocking filter based on H.264/AVC. The residual data decoder 570 may further perform inverse transformation using inverse DCT and dequantization for particular pictures (e.g. P or B pictures) as well as for residual data according to H.264/AVC. The intra-prediction video decoding apparatus may further perform H.264/AVC-based video decoding as well as the intra-prediction decoding described herein.

A description will be made below of a video decoding operation by the intra-prediction decoding of an embodiment of the present invention.

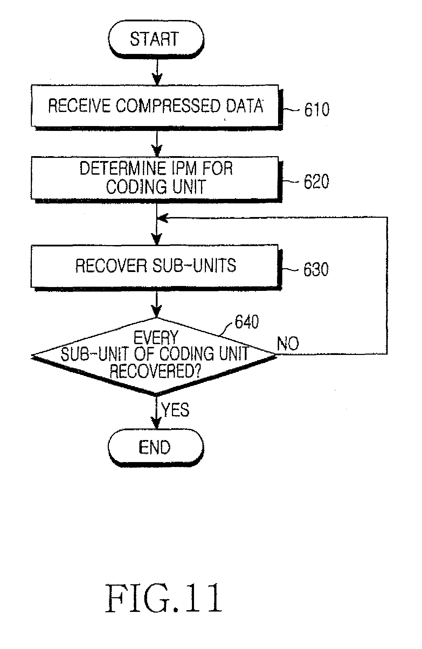

FIG. 11 is a flowchart illustrating an intra-prediction decoding method according to an embodiment of the present invention. Referring to FIG. 11, the DEMUX 510 receives compressed data in step 610 and recovers information indicating an IPM for a coding unit from the compressed data and provides the IPM information to the intra decoder 520 in step 620.

The sub-units of the coding unit are recovered in step 630. Preferably, at least the intra decoder 520, the residual data decoder 570, and the adder 575 are involved in step 630. Specifically, the intra decoder 520 identifies the IPM from the IPM information and performs intra-prediction for the coding unit on a sub-unit basis according to the IPM. That is, the intra decoder 520 retrieves pixel values required for intra-prediction in the IPM from the storage 530 and generates predicted unit by intra-prediction in the IPM using the pixel values., The residual data decoder 570 decodes residual data corresponding to the predicted sub-units on a sub-unit basis. The adder 575 generates recovered sub-units by combining the predicted sub-units received from the intra decoder 520 with the residual data received from the residual data decoder 570.

Since the coding unit includes a plurality of sub-units, recovered sub-units should be created for all the sub-units, for recovering the coding unit. Hence, it is determined whether intra-prediction has been completed for every sub-unit of the coding unit in step 640. If there remains any sub-unit to be predicted, step 630 is repeated until every sub-unit of the coding unit is recovered.

While step 630 is performed by the intra predictor 520, the residual data decoder 570, and the adder 575 on the assumption that entropy decoding is completed by the entropy decoder 560 in an embodiment of the present invention, to which the present invention is not limited, the entropy decoding can be performed in step 630. In this case, step 630 can be performed by the intra predictor 520, the entropy decoder 560, the residual data decoder 570, and the adder 575.

The intra decoding method according to an embodiment of the present invention will be detailed, by way of specific examples.

The DEMUX 510 receives compressed data in step 610 and IPM information acquired in step 620 indicates the horizontal IPM illustrated in FIG. 6.

The intra decoder 520 performs horizontal intra-prediction on a sub-unit basis in the order illustrated in FIG. 4 in step 630. Specifically, the intra decoder 520 recovers 16 pixel values of 4x4 sub-unit 0 by intra-prediction using four neighboring pixel values to the left of sub-unit 0 retrieved from the storage 530. The residual data decoder 570 decodes residual data of sub-unit 0 and the adder 575 generates recovered sub-unit 0 by combining predicted sub-unit 0 with the residual data received from the residual data decoder 570. Recovered sub-unit 0 is stored in the storage 530.

Then the intra decoder 520 retrieves the four utmost right pixel values of sub-unit 0 from the storage 530 and recovers 16 pixel values of 4x4 sub-unit 1 by intra-prediction based on the retrieved pixel values. The resulting recovered sub-unit 1 is stored in the storage 530.

The intra decoder 520, the residual data decoder 570, and the adder 575 generate recovered sub-units 2 to 15 by repeating the above operation in step 640. Intra-prediction is completed for the coding unit by generating a recovered sub-unit for every sub-unit of the coding unit.

While sub-unit intra-prediction is performed on a 4x4 block basis in FIGs. 5, 6 and 7 in embodiments of the present invention, to which the present invention is not limited, it is obvious that the same operation applies to 8x8 or 2x2 blocks.

While the sub-units of a coding unit are predicted in the order illustrated in FIG. 4, to which the present invention is not limited, many other intra-prediction orders are available.

As is apparent from the above description, the distance between neighboring pixels decreases as sub-units for intra-prediction are decreased in size. Intra-predicted coding units become more similar to an original image and prediction performance is improved, while the amount of residual data to be encoded after prediction is decreased. As a consequence, intra-prediction coding efficiency is increased. In addition, the intra-prediction coding/decoding method increases coding efficiency compared to the use of the conventional 16x16 IPMs. Furthermore, the number of IPMs for a coding unit is remarkably reduced, relative to video coding in the conventional 4x4 IPMs.

The intra-prediction coding/decoding method described herein can also be embodied as computer-readable codes on a recording medium readable by digital equipment or devices. The intra-prediction coding/decoding method can be realized in the form of digital content including coded compressed data. The digital equipment and device-readable recording medium can be any data storage device that can store data which can thereafter be read by a digital equipment and device system. Examples of the digital equipment and device-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The digital equipment and device-readable recording medium can also be distributed over network-coupled computer systems so that the computer-readable code is stored and executed in a distributed fashion. Also, function programs, codes, and code segments for accomplishing the present invention can be easily construed as within the scope of the invention by programmers skilled in the art to which the present invention pertains.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. An intra-prediction coding method, comprising the steps of:
receiving a picture to be encoded in coding units;
dividing each of the coding units into a plurality of sub-units;
determining an Intra-Prediction Mode (IPM) for the each coding unit;
acquiring residual data for each sub-unit of each coding unit according to the determined IPM; and
encoding information about the IPM of each coding unit and the residual data of each sub-unit of each coding unit.

2. The intra-prediction coding method of claim 1, wherein the IPM determination comprises receiving from a user information indicating an IPM and determining the IPM as the IPM for each coding unit, and the residual data acquisition comprises performing intra-prediction by applying the determined IPM to each sub-unit and acquiring residual data between a predicted sub-unit and an original sub-unit.

3. The intra-prediction coding method of claim 1, wherein the IPM determination comprises:
performing intra-prediction on a sub-unit basis in each of a plurality of IPMs;
determining residual data between predicted sub-units and original sub-units and generating recovered sub-units by combining the residual data with the predicted sub-units; and selecting an IPM from the plurality of IPMs as the IPM of each coding unit, and
wherein the residual data acquisition comprises reading the residual data generated during generation of the recovered sub-units.

4. The intra-prediction coding method of claim 3, wherein the IPM selection comprises:
acquiring a cost of the coding unit by combining the recovered sub-units for each of the plurality of IPMs; and
selecting an IPM with a minimum cost as the IPM of each coding unit.

5. The intra-prediction coding method of claim 3 or 4, wherein the intra-prediction on a sub-unit basis comprises performing intra-prediction on a sub-unit basis using pixels of a recovered sub-unit neighboring each sub-unit.

6. A method for recovering a video signal in coding units from coded compressed data, comprising the steps of:
determining an Intra-Prediction Mode (IPM) for a coding unit from the compressed data;
recovering sub-units of the coding unit according to the determined IPM; and
recovering video information of the coding unit by combining the recovered sub-units.

7. The method of claim 6, wherein the sub-unit recovery comprises:
acquiring residual data of the sub-units from the compressed data;
performing intra-prediction for the sub-units by applying the same IPM to the sub-units; and
recovering the sub-units by combining the predicted sub-units with the residual data of the sub-units.

8. The method of claim 7, wherein the sub-unit intra-prediction comprises performing intra-prediction for each sub-unit using recovered pixel values neighboring each sub-unit.

9. An intra-prediction coding apparatus comprising:
an intra predictor for applying a same Intra-Prediction Mode (IPM) to a plurality of sub-units divided from a coding unit, generating residual data for the sub-units of the coding unit, and encoding information about the IPM of the coding unit and the residual data of the sub-units.

10. The intra-prediction coding apparatus of claim 9, wherein the intra predictor determines the IPM for the coding unit, based on predicted results of the sub-units.

11. The intra-prediction coding apparatus of claim 9 or 10, further comprising:
a subtractor for acquiring a difference between a predicted sub-unit generated by applying the IPM to a sub-unit and a sub-unit of an externally received original picture;
a residual data encoder for encoding residual data including the acquired difference;
a residual data decoder for decoding the encoded residual data in accordance with an encoding method of the residual data encoder; and
an adder for generating a recovered sub-unit by combining the predicted sub-unit with the decoded residual data.

12. The intra-prediction coding apparatus of claim 11, wherein the intra predictor performs intra-prediction for each sub-unit on a sub-unit basis using pixels of a recovered sub-unit neighboring each sub-unit.

13. An apparatus for recovering a video signal in coding units from coded compressed data, comprising:
a demultiplexer for demultiplexing the coded compressed data into information about an Intra-Prediction Mode (IPM) for a coding unit and residual data of sub-units of the coding unit; and
an intra decoder for performing intra-prediction for the sub-units by applying the IPM to the sub-units.

14. The apparatus of claim 13, further comprising:
a residual data decoder for decoding the residual data in accordance with a coding method of the residual data; and
an adder for generating recovered sub-units by combining predicted sub-units with the decoded residual data.

15. The apparatus of claim 13, wherein the intra decoder performs intra-prediction for each sub-unit using recovered pixel values neighboring each sub-unit.
